(19) Europäisches Patentamt
European Patent Office
Office européen des brevets

(11) Publication number: **0 366 290 B1**

(12) **EUROPEAN PATENT SPECIFICATION**

(45) Date of publication of patent specification: **29.06.94**

(51) Int. Cl.5: **C08F 4/642**, C08F 10/00

(21) Application number: **89310165.9**

(22) Date of filing: **04.10.89**

(54) **Process for producing olefin polymers.**

(30) Priority: **24.10.88 JP 267854/88**

(43) Date of publication of application:
**02.05.90 Bulletin 90/18**

(45) Publication of the grant of the patent:
**29.06.94 Bulletin 94/26**

(84) Designated Contracting States:
**BE DE FR GB IT**

(56) References cited:
**EP-A- 0 069 951**

**MAKROMOLEKULARE CHEMIE, RAPID COMMUNICATIONS. vol. 1, 1980, BASEL CH pages775 - 777; S. INOUE: 'NOVEL ZINC CARBOXYLATES AS CATALYSTS FOR THECOPOLYMERIZATION OF CARBON DIOXIDE WITH EPOXIDES'**

(73) Proprietor: **CHISSO CORPORATION**
**6-32, Nakanoshima 3-chome**
**Kitaku**
**Osaka(JP)**

(72) Inventor: **Saito, Noriaki**
**2-17, Tatsumidaihigashi**
**Ichiharashi Chibaken(JP)**
Inventor: **Kumahara, Katsumi**
**2-17, Tatsumidaihigashi**
**Ichiharashi Chibaken(JP)**

(74) Representative: **Lamb, John Baxter et al**
**MARKS & CLERK,**
**57-60 Lincoln's Inn Fields**
**London WC2A 3LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a process for producing olefin polymers. More particularly it relates to a process for producing olefin polymers using a small quantity of a catalyst and yet affording a good catalyst efficiency, by repeatedly using a specified homogeneous catalyst.

As homogeneous catalysts for olefin polymerization, the so-called Kaminsky catalyst system has been well known. This catalyst system has a very high polymerization activity, and yet for example, in the case of propylene polymerization, it has been known that either of atactic polypropylene and isotactic polypropylene can be produced (see Makromol. Chem., Rapid Commun., 4, 417-421 (1983) and Angew. Chem. Int Ed. Engl., 24, 507-508 (1985)).

Further, a long term duration of the polymerization activity is one of the specific features of this catalyst system (see J. Polym. Sci., Polym. Chem. Ed., 23, 2151-2164 (1985)).

However, the catalyst system has a high ratio of an aluminoxane to a transition metal compound, for example, of an order of 1,000:1 and at the highest, $10^6$:1. When such a large quantity of an aluminoxane is used, it is necessary to subject the resulting polymer to a large scale treatment in order to remove undesirable aluminum. Further, there has also been a problem that the cost of aluminoxane is high.

In order to solve these problems, a process has been known that it is possible to reduce the ratio of an aluminoxane to a transition metal compound by using a reaction product of a transition metal compound with an aluminoxane (see Japanese patent application laid-open No. Sho 63-501,962/1988), but according to the process, the polymerization activity has been low and the quantity of the aluminoxane used has been still not reduced.

Further, a process has also been proposed that olefins are polymerized by using a catalyst composed of a transition metal compound and a mixed organoaluminum compound consisting of an aluminoxane and an organoaluminum compound, and according to such a process, the polymerization activity per unit transition metal is improved (see Japanese patent application laid-open Nos. Sho 60-130,604/1985 and Sho 60-260,602/1985).

According to these processes, however, there has also been a problem that the quantity of the aluminoxane used is large and the activity per unit aluminoxane is still low.

## SUMMARY OF THE INVENTION

The present inventors have made extensive research in order to solve the above-mentioned problems, and as a result, have found that it is possible to reduce the quantity of aluminoxane used according to the following process for producing olefin polymers:

Namely, by polymerizing olefins by the use of a catalyst composed essentially of a liquid transition metal compound and an aluminoxane, followed by separating the resulting olefin polymers from the catalyst components and carrying out olefin polymerization by repeatedly using the separated catalyst components, olefin polymers are produced with a good efficiency.

The present invention is characterized in that

in the process for producing olefin polymers which polymerizes an olefin by contacting it with a homogeneous catalyst composed essentially of

(A) a liquid compound of a transition metal belonging to group IV B of the Periodic Table and

(B) an aluminoxane,

the improvement which comprises separating said catalyst from the resulting polymer and polymerizing said olefin repeatedly using the thus separated catalyst.

## BRIEF DESCRIPTION OF THE DRAWING

Fig. 1 shows a flow sheet illustrating the process of the present invention.

## DETAILED DESCRIPTION OF PREFERRED EMBODIMENTS

The liquid transition metal compound (A) the metal of which belongs to group IVB of the Periodic Table, as one of the catalyst components used in the process of the present invention, refers to a transition metal compound having as a bidentate ligand, a compound of cross-linked structure type having two groups selected from indenyl group and its partially hydrogenated substance bonded thereto by the medium of a lower alkyl group, a transition metal compound having two cyclopentadienyl groups or substituted cyclopentadienyl groups, a transition metal compound having a biscyclopentadienyl ligand of cross-linked structure

and further, an organic transition metal compound expressed by the formula $R^2{}_pMX_q$ wherein $R^2$ represents a hydrocarbon radical, M represents a transition metal belonging to group IVB of the Periodic Table, X represents a halogen atom, p represents an integer of 1 to 4, q represents an integer of 0 to 3 and $p+q=4$. Zr, Hf and Ti are preferred as the transition metal.

Examples of compounds of Zr, Hf or Ti are ethylenebis(indenyl)zirconium dichloride, ethylenebis-(indenyl)zirconium dimethyl, ethylenebis(indenyl)zirconium diphenyl, ethylenebis(4,5,6,7-tetrahydro-1-indenyl)zirconium dichloride, ethylenebis(4,5,6,7-tetrahydro-1-indenyl)zirconium dimethyl, ethylenebis(4-methyl-1-indenyl)zirconium dichloride, ethylenebis(5-methyl-1-indenyl)zirconium dichloride, ethylenebis(2,3-dimethyl-1-indenyl)zirconium dichloride, ethylenebis(4,7-dimethyl-1-indenyl)zirconium dichloride, biscyclopentadienylzirconium dichloride, bis(methylcyclopentadienyl)zirconium dichloride, bis(1,2-dimethylcyclopentadienyl)zirconium dichloride, bis(1,3-dimethylcyclopentadienyl)zirconium dichloride, bis(1,2,3-trimethylcyclopentadienyl)zirconium dichloride, bis(1,2,4-trimethylcyclopentadienyl)zirconium dichloride, bis-(1,2,4-trimethylcyclopentadienyl)zirconium dimethyl, bis(1,2,3,4-tetramethylcyclopentadienyl)zirconium dichloride, bis(1,2,3,4-tetramethylcyclopentadienyl)zirconium dimethyl, bis(pentamethylcyclopentadienyl)-zirconium dichloride, tetrabenzylzirconium, tetraneopentylzirconium, tetraneophylzirconium, trineophylzirconium chloride, dineophylzirconium dichloride, tetraallylzirconium, dimethylsilylbis-(methylcyclopentadienyl)zirconium dichloride, dimethylgermylbis(methylcyclcpentadienyl)zirconium dichloride, ethylenebis(indenyl)hafnium dichloride, biscyclopentadienylhafnium dichloride, dimethylsilylbis-(methylcyclopentadienyl)hafnium dichloride, biscyclopentadienyltitanium dichloride, dimethylsilylbis-(methylcyclopentadienyl)titanium dichloride, etc.

The aluminoxane (B) as another catalyst component used in the process of the present invention is an organoaluminum compound expressed by the formula [I] or [II]

$$R^1{}_2Al-(O\underset{\displaystyle R^1}{\underset{|}{Al}})_m-OAlR^1{}_2 \quad \cdots [I]$$

$$\left[\!\!-(O\underset{\displaystyle R^1}{\underset{|}{Al}})_{m+2}\!\!-\right]_{\text{cyclic}} \quad \cdots [II]$$

wherein $R^1$ presents a hydrocarbon radical such as methyl group, ethyl group, propyl group, butyl group, etc., preferably methyl group and ethyl group and m represents an integer of 4 to 30, preferably 6 or more, more preferably 10 or more.

Preparation of such compounds is known. For example, a process of adding a trialkyl aluminum to a suspension of a compound containing adsorbed water, a salt containing water of crystallization such as copper sulfate hydrate, aluminum sulfate hydrate, etc. in a hydrocarbon medium may be illustrated.

Examples of the olefin used for polymerization reaction in the process of the present invention are $\alpha$-olefins such as ethylene, propylene, 1-butene, 4-methyl-1-pentene, 1-hexene, 1-octene, 1-decene, 1-dodecene, 1-tetradecene, 1-hexadecene, 1-octadecene, 1-eicosene, etc., and mixed components of two or more of the foregoing may be used for the polymerization.

Further, dienes such as butadiene, 1,4-hexadiene, 1,4-pentadiene, 1,7-octadiene, 1,8-nonadiene, 1,9-decadiene, etc. or cyclic olefins such as cyclopropene, cyclobutene, cyclohexene, norbornene, dicyclopentadiene, etc. are also effectively used in the copolymerization thereof with $\alpha$-olefins.

The polymerization process employed in the present invention is applicable to either of liquid phase polymerization or gas phase polymerization. As the polymerization solvent for liquid phase polymerization, aromatic hydrocarbons such as benzene, toluene, o-xylene, m-xylene, p-xylene, ethylbenzene, butylbenzene, mesitylene, naphthalene, etc., aliphatic hydrocarbons such as n-butane, isobutane, n-pentane, n-hexane, n-heptane, n-octane, n-decane, etc., alicyclic hydrocarbons such as cyclopentane, methylcyclopentane, cyclohexane, cyclooctane, etc., petroleum fractions such as gasoline, kerosine, gas oil, etc. may be used. Among these, toluene, xylene, n-hexane, n-heptane, etc. are preferred.

Further, liquefied olefins such as liquefied propylene, liquefied butene-1, etc., themselves may also be usable as the solvent.

The phase of olefin polymers in the polymerization system may be present in the state of solid phase or liquid phase or mixed phase thereof.

As to the production process of the present invention, a series of steps may be carried out batchwise or in continuous manner.

As to the catalyst components, two components of (A) a transition metal compound the metal of which belongs to group IVB of the Periodic Table and (B) an aluminoxane may be in advance mixed, followed by feeding the mixture to the reaction system, or the two components (A) and (B) may be separately fed to the reaction system.

In either case, the concentrations and molar ratio of the two components in the polymerization system have no particular limitation, but the concentration of the transition metal is preferably in the range of $10^{-1}$ to $10^{-12}$ mol/ℓ and the molar ratio of Aℓ/transition metal atom is preferably in the range of $10^2$ to $10^7$, more preferably $10^3$ to $10^5$.

Further, the organoaluminum compound expressed by $R_nA\ell C\ell_{3-n}$ wherein R represents a hydrocarbon radical of 1 to 10 carbon atoms and n represents 1 to 3, may be used if necessary.

The olefin pressure of the reaction system has no particular limitation, but it is preferably in the range of the atmospheric pressure to 70 Kg/cm$^2$G, and the polymerization temperature also has no particular limitation, but it is usually in the range of -50° to 230°C, preferably 20° to 100°C.

Adjustment of the molecular weight in the polymerization may be carried out by known means such as choice of temperature and pressure or introduction of hydrogen.

In the process of the present invention, the separation of the resulting olefin polymer from the catalyst consisting of the two components (A) and (B) may be carried out by subjecting a solid phase olefin polymer and the catalyst consisting of the two components (A) and (B) to a known separating means in the presence of a hydrocarbon compound.

Concretely, in the case of liquid phase polymerization using a hydrocarbon compound such as toluene, hexane, etc. as a polymerization solvent, the resulting olefin polymer after polymerization may be separated from the polymerization solvent by means of decantation, filtration, etc. Further, in order to raise the separation efficiency, the olefin polymer may be washed with a hydrocarbon such as toluene, hexane, etc., followed by separation.

In the case of liquid phase polymerization using a liquefied olefin such as liquefied propylene, liquefied butene-1, etc. as the polymerization solvent, the resulting olefin polymer may be separated from the liquefied monomer immediately after the polymerization by means of decantation, filtration, etc.; alternatively the solvent may be first removed by means of removal under reduced pressure, etc., followed by washing with a hydrocarbon compound such as toluene, hexane, etc. and then separating the olefin polymer therefrom by means of decantation, filtration, etc. In the case of gas phase polymerization, the resulting olefin polymer may be mixed with a hydrocarbon compound such as toluene, hexane, etc. after the polymerization, followed by washing and then separating the olefin polymer from the hydrocarbon compound by means of decantation, filtration, etc.

Further, in the case of production of an olefin polymer soluble in a polymerization solvent, the resulting solution consisting of the olefin polymer and the solvent may be cooled to thereby deposit the olefin polymer from the solution to bring it into a solid state, followed by separating the polymer by means of decantation, filtration, etc.

In the separation process, the catalyst consisting of the two components (A) and (B) is separated together with the hydrocarbon solvent such as toluene, hexane, etc. from the olefin polymer.

The hydrocarbon compound used for washing in the separation process may be a compound in which the catalyst consisting of the two components is soluble even in a small quantity, and the compound has no particular limitation besides, but toluene, xylene, hexane, pentane, etc. may be preferably used.

The temperature at which the olefin polymer is separated from the catalyst consisting of the two components (A) and (B) may be a temperature at which the two components (A) and (B) are not deactivated due to their decomposition or the like when they are again used for polymerization, and it has no particular limitation besides, but it is preferably in the range of 0° to 100°C.

Further, the separation of the olefin polymer from the catalyst consisting of the two component (A) and (B) may be carried but several times separately.

As to the process of again polymerizing the olefin using the separated catalyst consisting of the two components (A) and (B), the catalyst consisting of the two components (A) and (B) may be fed to the polymerization system and contacted with the olefin.

The catalyst consisting of the two components (A) and (B) may also be fed to the polymerization system together with the hydrocarbon compound such as toluene, hexane, etc. separated together with the two components (A) and (B) in the separation process or after removing a portion or the total of the hydrocarbon compound.

Further, fresh component (A) and component (B) each in a small quantity may be additionally added to the catalyst, followed by feeding the resulting mixture to the polymerization system.

The number of times in which the catalyst consisting of the two components (A) and (B) is repeatedly used for the polymerization has no particular limitation, and it is possible to repeatedly use the catalyst consisting of the two components (A) and (B) until its polymerization activity has been lost.

According to the process of the present invention for producing olefin polymers by the use of a liquid transition metal compound the metal of which belongs to group IVB of the Periodic Table and aluminoxane, in which process the catalyst is separated from the resulting olefin polymer, followed by again carrying out olefin polymerization using the separated catalyst, it has become possible to produce olefin polymers efficiently in a small quantity of the catalyst used, and particularly it has also become possible to reduce the quantity of aluminoxane used, the aluminoxane having so far been used in a large quantity and very expensive.

The present invention will be described in more detail by way of Examples.

Example 1

Polymerization (1)

Into a 1.7 ℓ capacity SUS autoclave sufficiently purged with nitrogen gas were successively added purified toluene (700 mℓ), methylaluminoxane (MW: 770) made by Toyo Stauffer Co., Ltd. (1.6 mmol) and ethylenebis(indenyl)zirconium dichloride (0.001 mmol) in nitrogen atmosphere, followed by raising the temperature up to 50 °C, continuously introducing propylene into the autoclave so as to keep the total pressure of propylene at 3 $Kg/cm^2$ to carry out polymerization for 2 hours, stopping the propylene feed, purging unreacted propylene and withdrawing the resulting polymer slurry (1) from the autoclave in nitrogen atmosphere.

Separation and polymerization (2)

The polymer slurry (1) was filtered with a glass filter (G-4) while keeping the temperature of the slurry at 50 °C in nitrogen atmosphere to separate polypropylene powder from the toluene solution.

The polypropylene powder was sufficiently dried, followed by measuring its yield and molecular weight, adding the total quantity of the toluene solution into a 1.7 ℓ capacity SUS autoclave sufficiently purged with nitrogen gas in nitrogen atmosphere, raising the temperature up to 50 °C, continuously introducing propylene into the autoclave so as to keep its total pressure at 3 $Kg/cm^2G$ to carry out polymerization for 2 hours, stopping the propylene feed, purging unreacted propylene and withdrawing the resulting polymer slurry (2) from the autoclave in nitrogen atmosphere.

Separation and polymerization (3)

Separation and polymerization (3) were carried out in the same manner as in the separation and polymerization (2) except that the polymer slurry (1) was changed to the polymer slurry (2).

Separation and polymerization (4)

Separation and polymerization (4) were carried out in the same manner as in the separation and polymerization (2) except that the polymer slurry (1) was changed to the polymer slurry (3).

Separation and polymerization (5)

Separation and polymerization (5) were carried out in the same manner as in the separation and polymerization (2), followed by withdrawing the resulting polymer slurry from the autoclave.

The polymer slurry was filtered with a glass filter to obtain polypropylene powder, followed by sufficiently drying the powder and measuring its yield and molecular weight. The results are shown in Table 1.

Table 1

| | | Polymer yield [g] | Average molecular weight [Mw] |
|---|---|---|---|
| Polymerization | (1) | 56 | 25000 |
| | (2) | 45 | 23000 |
| | (3) | 43 | 24000 |
| | (4) | 32 | 26000 |
| | (5) | 25 | 24000 |

| Total polymer yield per transition metal * [$10^6$ g-PP/mol-Zr] | Total polymer yield per aluminoxane * [g-PP/g-aluminoxane] |
|---|---|
| 201 | 163 |

* Total polymer yield: total polymer yield of polymerizations (1) to (5)

## Example 2

### Polymerization (1)

Into a 1.2 ℓ capacity SUS autoclave sufficiently purged with nitrogen gas were successively added methylaluminoxane (M.W.: 880) made by Toyo Stauffer Co., Ltd. (0.5 mmol), dimethylsilylbis-(methylcyclopentadienyl)zirconium dichloride (0.0005 mmol) and liquefied propylene (300 g), followed by carrying out polymerization for 2 hours while keeping the polymerization temperature at 50 °C.

### Separation and polymerization (2)

Unreacted propylene inside the autoclave was purged, followed by adding purified toluene (700 mℓ) in nitrogen atmosphere, agitating the mixuture at 50 °C for 15 minutes, withdrawing the resulting polymer slurry from the autoclave in nitrogen atmosphere, and filtering the slurry with a glass filter (G-4) while keeping the temperature at 50 °C to separate polypropylene powder from the toluene solution.

The polypropylene powder (polymer of polymerization (1)) was sufficiently dried, followed by measuring its yield and molecular weight, removing toluene from the toluene solution under reduced pressure until its total quantity became 10 mℓ, adding the total quantity of the toluene solution concentrated in nitrogen atmosphere into a 1.2 ℓ capacity SUS autoclave sufficiently purged with nitrogen gas, adding liquefied

propylene (300 g) and carrying out polymerization for 2 hours while keeping the polymerization temperature at 50 °C.

Separation and polymerization (3)

Separation and polymerization (3) were carried out in the same manner as in the separation and polymerization (2).

Separation and polymerization (4)

Separation and polymerization (4) were carried out in the same manner as in the separation and polymerization (2).

Separation and polymerization (5)

Separation and polymerization (5) were carried out in the same manner as in the separation and polymerization (2).

Unreacted propylene inside the autoclave was purged, followed by withdrawing polypropylene powder from the autoclave, sufficiently drying the polypropylene powder (polymer of polymerization (5)) and measuring its yield and molecular weight. The results are shown in Table 2.

Table 2

| | | Polymer yield [g] | Average molecular weight [$\overline{Mw}$] |
|---|---|---|---|
| Polymerization | (1) | 47 | 11000 |
| | (2) | 40 | 11000 |
| | (3) | 32 | 10000 |
| | (4) | 29 | 12000 |
| | (5) | 20 | 10000 |

| Total polymer yield per transition metal* [$10^6$ g-PP/mol-Zr] | Total polymer yield per aluminoxane * [g-PP/g-aluminoxane] |
|---|---|
| 336 | 420 |

* Total polymer yield: the total polymer yield of polymerizations (1) to (5).

Example 3

Example 1 was repeated except that the quantity of ethylenebis(indenyl)zirconium dichloride used was changed from 0.001 mmol to 0.0002 mmol, the quantity of methylaluminoxane used was changed from 1.6 mmol to 0.4 mmol and the monomer was changed from propylene to ethylene. The results are shown in Table 3.

Example 4

Example 1 was repeated except that ethylenebis(indenyl)zirconium dichloride (0.001 mmol) was changed to bis(1,2,4-trimethylcyclopentadienyl)zirconium dichloride (0.0002 mmol) and the monomer was changed from propylene to ethylene. The results are shown in Table 3.

Example 5

Example 2 was repeated except that dimethylsilylbis(methylcyclopentadienyl)zirconium dichloride (0.0005 mmol) was changed to ethylenebis(indenyl)hafnium dichloride (0.002 mmol), the quantity of methylaluminoxane used was changed from 0.5 mmol to 1.2 mmol and the polymerization time was changed from 2 hours to 4 hours. The results are shown in Table 4.

Table 3

| | | Polymer yield [g] | Average molecular weight [$\overline{Mw}$] |
|---|---|---|---|
| Example 3 | Polymerization (1) | 47 | 85000 |
| | (2) | 44 | 83000 |
| | (3) | 35 | 80000 |
| | (4) | 31 | 82000 |
| | (5) | 22 | 84000 |
| Example 4 | Polymerization (1) | 58 | 63000 |
| | (2) | 53 | 59000 |
| | (3) | 41 | 60000 |
| | (4) | 29 | 60000 |
| | (5) | 19 | 57000 |

| | Total polymer yield per transition metal* [$10^6$g-PE/mol-Zr] | Total polymer yield per aluminoxane * [g-PE/g-aluminoxane] |
|---|---|---|
| Example 3 | 895 | 581 |
| Example 4 | 100 | 162 |

Table 4

| | | Polymer yield [g] | Average molecular weight [$\overline{Mw}$] |
|---|---|---|---|
| Example 5 | Polymerization (1) | 61 | 14000 |
| | (2) | 47 | 15000 |
| | (3) | 43 | 15000 |
| | (4) | 31 | 14000 |
| | (5) | 24 | 12000 |

| | Total polymer yield per transition metal* [$10^6$ g-PP/mol-Zr] | Total polymer yield per aluminoxane * [g-PP/g-aluminoxane] |
|---|---|---|
| Example 5 | 103 | 215 |

* Total polymer yield in Tables 3 and 4: the total polymer yield of polymerizations (1) to (5).

## Claims

1. A process for producing olefin polymers by polymerizing an olefin by contacting it with a homogeneous catalyst composed of:
   (A) a liquid compound of a transition metal of group IV B of the Periodic Table, and
   (B) an aluminoxane,
   characterised in that the catalyst is separated from the resulting polymer and further olefin is repeatedly polymerized using the separated catalyst.

2. A process according to claim 1 wherein the liquid transition metal compound is a zirconium, hafnium or titanium compound selected from:
   ethylenebis(indenyl)zirconium dichloride, ethylenebis(indenyl)zirconiumdimethyl, ethylenebis(indenyl)-zirconium diphenyl, ethylenebis(4,5,6,7-tetrahydro-1-indenyl)zirconium dichloride, ethylenebis(4,5,6,7-tetrahydro-1-indenyl)zirconium dimethyl, ethylenebis(4-methyl-1-indenyl)zirconium dichloride, ethylenebis(5-methyl-1-indenyl)ziconium dichloride, ethylenebis(2,3-dimethyl-1-indenyl)zirconium dichloride, ethylenebis(4,7-dimethyl-1-indenyl)zirconium dichloride, biscyclopentadienylzirconium dichloride, bis(methylcyclopentadienyl)zirconium dichloride, bis(1,2-dimethylcyclopentadienyl)zirconium dichloride, bis(1,3-dimethylcyclopentadienyl)zirconium dichloride, bis(1,2,3-trimethylcyclopentadienyl)-zirconium dichloride, bis(1,2,4-trimethylcyclopentadienyl)zirconium dichloride, bis(1,2,4-trimethylcyclopentadienyl)zirconium dimethyl, bis(1,2,3,4-tetramethylcyclopentadienyl)zirconium dichloride, bis-(1,2,3,4-tetramethylcyclopentadienyl)zirconium dimethyl, bis(pentaethylcyclopentadienyl)zirconium dichloride, tetrabenzylzirconium, tetraneopentylzirconium, tetraneophylzirconium, trineophylzirconium chloride, dineophylzirconium dichloride, tetraallylzirconium, dimethylsilylbis(methylcyclopentadienyl)-zirconium dichloride, dimethylgermylbis(methylcyclopentadienyl)zirconium dichloride, ethylenebis-(indenyl)hafnium dichloride, biscyclopentadienylhafnium dichloride, dimethylsilylbis-(methylcyclopentadienyl)hafnium dichloride, biscyclopentadienyltitanium dichloride and dimethylsilylbis-(methylcyclopentadienyl)titanium dichloride.

3. A process according to claim 1 or claim 2 wherein the aluminoxane is an organoaluminum compound of the formulae:

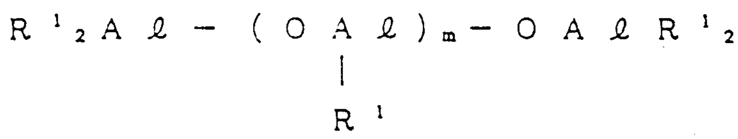

··· [ I ]

or

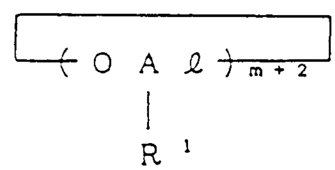

··· [ II ]

wherein $R^1$ is a methyl, ethyl, propyl or butyl group, and m is an integer of from 4 to 30.

4. A process according to any one of the preceding claims in which the olefin is an α-olefin selected from ethylene, propylene, 1-butene, 4-methyl-1-pentene, 1-hexene, 1-octene, 1-decene, 1-dodecene, 1-tetradecene, 1-hexadecene, 1-octadecene, 1-eicosene and mixtures thereof.

5. A process according to claim 4 wherein the α-olefin is copolymerized with a diene and/or a cycloolefin selected from butadiene, 1,4-hexadiene, 1,4-pentadiene, 1,7-octadiene, 1,8-nonadiene, 1,9-decadiene, cyclopropene, cyclobutene, cyclohexene, norbornene or dicyclopentadiene.

6. A process according to any one of the preceding claims wherein the polymerizations are carried out in the liquid phase using a polymerization solvent.

7. A process according to claim 6 wherein the polymerization solvent is benzene, toluene, o-xylene, m-xylene, p-xylene, ethylbenzene, butylbenzene, mesitylene, naphthalene, n-butane, isobutane, n-pentane, n-hexane, n-heptane, n-octane, n-decane, cyclopentane, methylcyclopentane, cyclohexane, cyclooctane, gasoline, kerosine, gas oil, liquefied propylene, liquefied butene-1 or a mixture of two or more thereof.

8. A process according to claim 6 or claim 7 wherein the polymerizations are carried out under an olefin pressure of from atmospheric pressure to 70 $Kg/cm^2G$, at a polymerization temperature of -50 °C +230 °C and for a period of 1 to 50 hours.

9. A process according to any one of claims 6-8 wherein the concentration of the liquid transition metal compound in the liquid phase is from $10^{-1}$ to $10^{-12}$ mol/ℓ in terms of the transition metal and the molar ratio of the aluminoxane to the liquid transition metal compound is from from $10^2$ to $10^7$ in terms of Aℓ

the transition metal atom.

## Patentansprüche

1. Verfahren zum Herstellen von Olefinpolymeren durch Polymerisieren eines Olefins, indem man es mit einem homogenen Katalysator in Kontakt bringt, zusammengesetzt aus:
   (A) einer flüssigen Verbindung eines Übergangsmetalls der Gruppe IV B der Tabelle des Periodensystems und
   (B) einem Aluminoxan,
   dadurch gekennzeichnet, daß der Katalysator vom erhaltenen Polymer abgetrennt und weiteres Olefin wiederholt unter Verwendung des abgetrennten Katalysators polymerisiert wird.

2. Verfahren nach Anspruch 1, worin die flüssige Übergangsmetallverbindung eine Zirkonium-, Hafnium- oder Titanverbindung ist, ausgewählt aus:
   Ethylenbis(indenyl)zirkoniumdichlorid, Ethylenbis(indenyl)zirkoniumdimethyl, Ethylenbis(indenyl)-zirkoniumdiphenyl, Ethylenbis(4,5,6,7-tetrahydro-1-indenyl)zirkoniumdichlorid, Ethylenbis(4,5,6,7-tetrahydro-1-indenyl)zirkoniumdimethyl, Ethylenbis(4-methyl-1-indenyl)zirkoniumdichlorid, Ethylenbis(5-methyl-1-indenyl)zirkoniumdichlorid, Ethylenbis(2,3-dimethyl-1-indenyl)zirkoniumdichlorid, Ethylenbis(4,7-dimethyl-1-indenyl)zirkoniumdichlorid, Biscyclopentadienylzirkoniumdichlorid, Bis-(methylcyclopentadienyl)zirkoniumdichlorid, Bis(1,2-dimethylcyclopentadienyl)zirkoniumdichlorid, Bis-(1,3-dimethylcyclopentadienyl)zirkoniumdichlorid, Bis(1,2,3-trimethylcyclopentadienyl)zirkoniumdichlorid, Bis(1,2,4-trimethylcyclopentadienylzirkonium)dichlorid, Bis(1,2,4-trimethylcyclopentadienyl)-zirkoniumdimethyl, Bis(1,2,3,4-tetramethylcyclopentadienyl)zirkoniumdichlorid, Bis(1,2,3,4-tetramethylcyclopentadienyl)zirkoniumdimethyl, Bis(pentamethylcyclopentadienyl)zirkoniumdichlorid,
   Tetrabenzylzirkonium,
   Tetraneopentylzirkonium,
   Tetraneophylzirkonium,
   Trineophylzirkoniumchlorid,
   Dineophylzirkoniumdichlorid,
   Tetraallylzirkonium,
   Dimethylsilylbis(methylcyclopentadienyl)zirkoniumdichlorid, Dimethylgermylbis-(methylcyclopentadienyl)zirkoniumdichlorid, Ethylenbis(indenyl)hafniumdichlorid,
   Biscyclopentydienylhafniumdichlorid,
   Dimethylsilylbis(methylcyclopentadienyl)hafniumdichlorid, Biscyclopentadienyltitaniumdichlorid und Dimethylsilylbis(methylcyclopentadienyl)titaniumdichlorid.

3. Verfahren nach Anspruch 1 oder 2, worin das Aluminoxan eine Organoaluminiumverbindungder Formel:

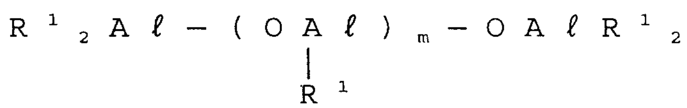

[ I ]

oder

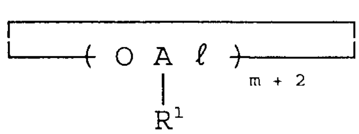

[ II ],

in der $R^1$ eine Methyl-, Ethyl-, Propyl- oder Butylgruppe ist und m eine ganze Zahl von 4 bis 30 ist.

4. Verfahren nach einem der vorhergehenden Ansprüche, in dem das Olefin ein α-Olefin ist, ausgewählt aus Ethylen, Propylen, 1-Buten, 4-Methyl-1-penten, 1-Hexen, 1-Octen, 1-Decen, 1-Dodecen, 1-Tetradecen, 1-Hexadecen, 1-Octadecen, 1-Eicosen und Gemischen davon.

5. Verfahren nach Anspruch 4, worin das α-Olefin mit einem Dien und/- oder einem Cycloolefin copolymerisiert wird, ausgewählt aus Butadien, 1,4-Hexadien, 1,4-Pentadien, 1,7-Octadien, 1,8-Nonadien, 1,9-Decadien, Cyclopropen, Cyclobuten, Cyclohexen, Norbornen oder Dicyclopentadien.

6. Verfahren nach einem der vorhergehenden Ansprüche, worin die Polymerisationen in flüssiger Phase unter Verwendung eines Polymerisationslösungsmittels ausgeführt werden.

7. Verfahren nach Anspruch 6, worin das Polymerisationslösungsmittel Benzol, Toluol, o-Xylol, m-Xylen, p-Xylen, Ethylbenzol, Butylbenzol, Mesitylen, Naphthalen, n-Butan, Isobutan, n-Pentan, n-Hexan, n-Heptan, n-Octan, n-Decan, Cyclopentan, Methylcyclopentan, Cyclohexan, Cyclooctan, Benzin, Kerosin, Gasöl, verflüssigtes Propylen, verflüssigtes Buten-1 oder Gemische von zwei oder mehreren davon ist.

8. Verfahren nach Anspruch 6 oder 7, worin die Polymerisationen unter einem Olefindruck von atmosphärischem Druck bis 70 kg/cm$^2$G, bei einer Polymerisationstemperatur von -50 °C bis 230 °C und während einer Dauer von 1 bis 50 Stunden durchgeführt werden.

9. Verfahren nach einem der Ansprüche 6 bis 8, worin die Konzentration der flüssigen Übergangsmetallverbindung in der flüssigen Phase von $10^{-1}$ bis $10^{-12}$ mol/ℓ hinsichtlich des Übergangsmetalls beträgt und das Molverhältnis des Aluminoxans zu der flüssigen Übergangsmetallverbindung von $10^2$ bis $10^7$ bezüglich des Aℓ des Übergangsmetallatoms beträgt.

**Revendications**

1. Procédé de préparation de polymères d'oléfines par polymérisation d'une oléfine en la mettant en contact avec un catalyseur homogène composé de
   (a) un composé liquide d'un métal de transition du groupe (IV) B du Tableau périodique et
   (b) un aluminoxane,

   caractérisé en ce que le catalyseur est séparé du polymère résultant et qu'une quantité supplémentaire d'oléfine est polymérisée de manière répétitive en utilisant le catalyseur séparé.

2. Procédé selon la revendication 1, dans lequel le composé de métal de transition est un composé du zirconium, de l'hafnium ou du titane choisi parmi:

   le dichlorure d'éthylènebis(indényl)zirconium, l'éthylènebis(indényl)zirconium diméthyle, l'éthylènebis-(indényl)zirconium diphényle, le dichlorure d'éthylènebis(4,5,6,7-tétrahydro-1-indényl)zirconium, l'éthylènebis(4,5,6,7-tétrahydro-1-indényl)zirconium diméthyle, le dichlorure d'éthylènebis(4-méthyl-1-indényl)zirconium, le dichlorure d'éthylènebis(5-méthyl-1-indényl)zirconium, le dichlorure d'éthylènebis-(2,3-diméthyl-1-indényl)zirconium, le dichlorure d'éthylènebis(4,7-diméthyl-1-indényl)zirconium, le dichlorure de biscyclopentadiénylzirconium, le dichlorure de bis(méthylcyclopentadiényl)-zirconium, le dichlorure de bis(1,2-diméthylcyclopentadiényl)zirconium, le dichlorure de bis(1,3-diméthylcyclopentadiényl)zirconium, le dichlorure de bis(1,2,3-triméthylcyclopentadiényl)zirconium, le dichlorure de bis-(1,2,4-triméthylcyclopentadiényl)zirconium, le bis(1,2,4-triméthylcyclopentadiényl)zirconium diméthyle, le dichlorure de bis(1,2,3,4-tétraméthylcyclopentadiényl)zirconium, le bis(1,2,3,4-tétraméthylcyclopentadiényl)zirconium diméthyle, le dichlorure de bis(pentaméthylcyclopentadiényl)zirconium, le tétrabenzylzirconium, le tétranéopentylzirconium, le tétranéophylzirconium, le chlorure de trinéophylzirconium, le dichlorure de dinéophylzirconium, le tétraallylzirconium, le dichlorure de diméthylsilylbis-(méthylcyclopentadiényl)zirconium, le dichlorure de diméthylgermylbis(méthylcyclopentadiényl)-zirconium, le dichlorure d'éthylènebis(indényl)hafnium, le dichlorure de biscyclopentadiénylhafnium, le dichlorure de diméthylsilylbis(méthylcyclopentadiényl)hafnium, le dichlorure de biscyclopentadiényltitane et le dichlorure de diméthylsilylbis(méthylcyclopentadiényl)titane.

3. Procédé selon la revendication 1 ou la revendication 2, dans lequel l'aluminoxane est un composé d'organoaluminum de la formule:

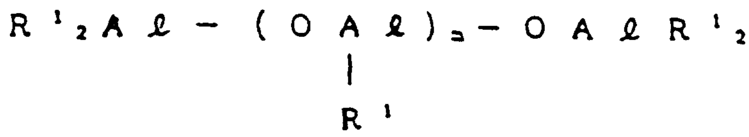 ... [ I ]

ou

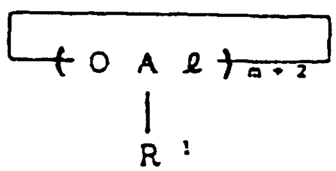 ... [ II ]

dans lesquelles $R^1$ est un groupement méthyle, éthyle, propyle ou butyle et m est un nombre entier compris entre 4 et 30 inclusivement.

**4.** Procédé selon l'une quelconque des revendications précédentes, dans lequel l'oléfine est une $\alpha$-oléfine choisie parmi l'éthylène, le propylène, le 1-butène, le 4-méthyl-1-pentène, le 1-hexène, le 1-octène, le 1-decène, le 1-dodécène, le 1-tétradécene, le 1-hexadécène, le 1-octadécène, le 1-eicosène et leurs mélanges.

**5.** Procédé selon la revendication 4, dans lequel l'$\alpha$-oléfine est copolymérisée avec un diène et/ou une cyclooléfine choisie parmi le butadiène, le 1,4-hexadiène, le 1,4-pentadiène, le 1,7-octadiène, le 1,8-nonadiène, le 1,9-décadiène, le cyclopropène, le cyclobutène, le cyclohexène, le norbornène et le dicyclopentadiène.

**6.** Procédé selon l'une quelconque des revendications précédentes, dans lequel les polymérisations sont effectuées en phase liquide en utilisant un solvant de polymérisation.

**7.** Procédé selon la revendication 6, dans lequel le solvant de polymérisation est le benzène, le toluène, l'o-xylène, le m-xylène, le p-xylène, l'éthylbenzène, le butylbenzène, le mesitylène, le naphthalène, le n-butane, l 'isobutane, le n-pentane, le n-hexane, le n-heptane, le n-octane, le n-décane, le cyclopentane, le méthylcyclopentane, le cyclohexane, le cyclooctane, l'essence, le kérosène, le gasoil, le propylène liquéfié, le butène-1 liquéfié ou un mélange de deux ou plus de deux de ceux-ci.

**8.** Procédé selon la revendication 6 ou la revendication 7, dans lequel les polymérisations sont effectuées sous une pression d'oléfine ou sous une pression du gaz atmosphérique jusqu'à 70 $kg/cm^2G$ à une température de polymérisation comprise entre -50 °C +230 °C inclusivement et pendant une période allant de 1 à 50 heures.

**9.** Procédé selon l'une quelconque des revendications 6 à 8, dans lequel la concentration du composé de métal de transition liquide dans la phase liquide est comprise entre $10^{-1}$ et $10^{-12}$ mole/l inclusivement en termes de métal de transition et le rapport molaire de l'aluminoxane sur le composé de métal de transition liquide va de $10^2$ à $10^7$ en termes de Al/atome de métal de transition.

FIG. I

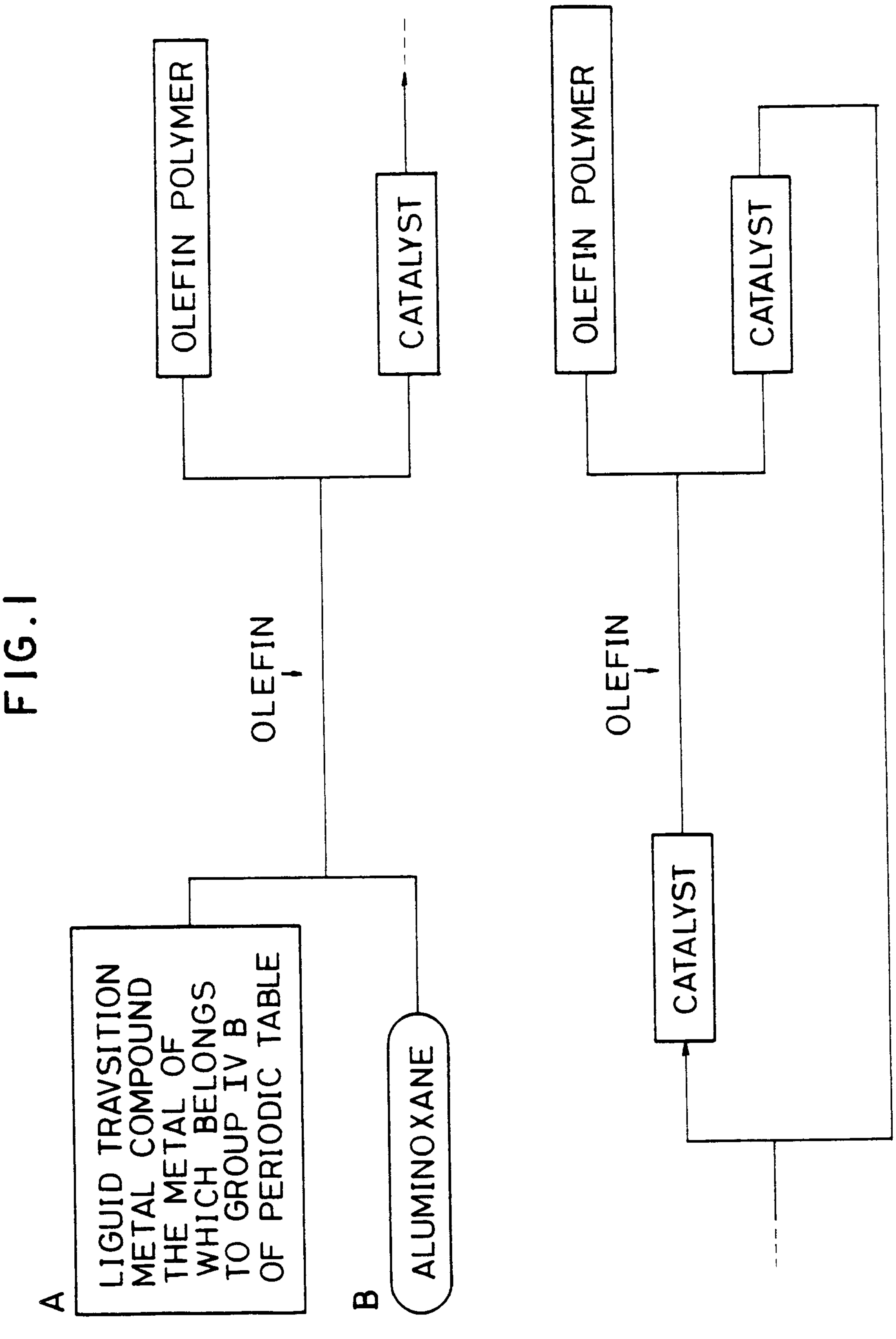
A
LIGUID TRAVSITION METAL COMPOUND THE METAL OF WHICH BELONGS TO GROUP IV B OF PERIODIC TABLE
B
ALUMINOXANE
OLEFIN
OLEFIN POLYMER
CATALYST
CATALYST
OLEFIN
OLEFIN POLYMER
CATALYST